# EUROPEAN PATENT SPECIFICATION

(11) **EP 4 599 797 B1**
(45) Date of publication and mention of the grant of the patent: **24.06.2026**
(21) Application number: 24197579.6
(22) Date of filing: 30.08.2024
(51) Int. Cl.: A61C 17/22

(54) **HOUSING STRUCTURE OF ELECTRIC TOOTHBRUSH**
GEHÄUSESTRUKTUR FÜR EINE ELEKTRISCHE ZAHNBÜRSTE
STRUCTURE DE BOÎTIER DE BROSSE À DENTS ÉLECTRIQUE

(30) Priority: 06.02.2024 CN 202420287270 U
(43) Date of publication of application: 13.08.2025
(73) Proprietor: Coral Innovations LTD, London W1W 7LT (GB)
(72) Inventor: SAFAVI, Gyve, London W1W 7LT (GB)
(74) Representative: Kehl, Ascherl, Liebhoff & Ettmayr Patentanwälte Partnerschaft mbB

(56) References cited:
- CN-U- 212 326 650

## Description

### TECHNICAL FIELD

The present disclosure relates to the technical field of electric toothbrushes, and in particular, to a housing structure of an electric toothbrush.

### BACKGROUND

With the continuous improvement of living standards, electric toothbrushes have become more and more popular in people's lives and have gradually become a daily necessity. During brushing, electric toothbrushes will encounter water, thus the waterproof performance of electric toothbrushes is very important. Since most current electric toothbrushes are equipped with wireless charging or contact charging components at the bottom, the charging components are often connected by segmented installation. On the one hand, a battery compartment or bottom cover is detachably mounted on a handle, which is easy to loosen after long-term use to lead to weakening of the waterproof effect, and even water will into the body to lead to failure. On the other hand, electric toothbrushes have been in a humid environment for a long time. Most of the current electric toothbrushes use plastic bodies, and water stains are easy to remain on the surface of the plastic housing, which are difficult to be cleaned, and thus the plastic bodies are easy to age after long-term use.

In the related existing technology, the handles of electric toothbrushes are formed by metal housings. However, the metal housings are cylindrical, and the bottom of the housing needs to be embedded into the handle from the outside, this design still has the problem of waterproof failure caused by loose connection.

CN 212 326 650 U discloses a housing structure of an electric toothbrush, the housing structure being applied to a handle body, and an end of the handle body being provided with a brush head, wherein the housing structure comprises: an outer housing having an inner cavity, and an inner housing nested within the outer housing, wherein an end of the inner housing is provided with a power-connecting component, the power-connecting component is connected to an inner wall of the inner housing, the power-connecting component is located in the narrowing section, and a radial outer wall of the power-connecting component abuts against an inner wall of the outer housing.

### SUMMARY

The present disclosure aims to solve at least one of the technical problems existing in the existing technology. To this end, the present disclosure proposes a housing structure of an electric toothbrush, which optimizes the sealing performance and makes the surface of the body easy to clean.

According to an embodiment of the present disclosure, a housing structure of an electric toothbrush is applied to a handle body. An end of the handle body is provided with a brush head. The housing structure includes:
an outer housing, having an inner cavity, where the outer housing is made of metal, and an end of the outer housing away from the brush head is provided with a narrowing section having a gradually decreasing inner diameter; and
an inner housing, nested within the outer housing and adhesively connected to an inner wall of the outer housing, where an end of the inner housing is provided with a power-connecting component, the power-connecting component is connected to an inner wall of the inner housing in a buckled manner, the power-connecting component is located in the narrowing section, and a radial outer wall of the power-connecting component abuts against an inner wall of the narrowing section.

According to an embodiment of the present disclosure, a housing structure of an electric toothbrush has at least the following beneficial effects. This embodiment is applied to a handle body. An end of the handle body is provided with a brush head, and the handle body includes an outer housing and an inner housing. The outer housing has an inner cavity and is made of metal, and the use of metal can optimize the convenience of cleaning and avoid plastic aging. An end of the outer housing away from the brush head is provided with a narrowing section having a gradually decreasing inner diameter. The inner housing is nested within the outer housing and is adhesively connected to an inner wall of the outer housing. Fixing the outer housing and the inner housing with an adhesive is helpful to simplify the connection structure, so as to improve the utilization of internal space. A power-connecting component is inserted into the end of the inner housing, and the power-connecting component is connected to an inner wall of the inner housing in a buckled manner. The power-connecting component is located in the narrowing section, and a radial outer wall of the power-connecting component abuts against an inner wall of the narrowing section, which is helpful to prevent the inner housing and the power-connecting component at its end from loosening and falling out of the narrowing section, thereby avoiding waterproof failure caused by loosening, helping to improve the sealing performance, and further improving aesthetics by reducing gaps on the handle body.

According to an embodiment of the present disclosure, a motor and a battery compartment are provided in the inner housing, and an end of the inner housing away from the narrowing section is provided with a covering portion, and an end of the motor abuts against an inner wall of the covering portion.

According to an embodiment of the present disclosure, an end of the battery compartment is provided with buckling grooves running through both sides of the battery compartment in a radial direction, and the power-connecting component is buckled in the buckling grooves.

According to an embodiment of the present disclosure, first snapping portions are provided at both radial ends of the power-connecting component, and the first snapping portions are plugged into the buckling grooves to achieve installation connection.

According to an embodiment of the present disclosure, protruding second snapping portions are provided on the radial outer side of the power-connecting component, and the inner wall of the inner housing is provided with buckling holes, and where the second snapping portions is capable of being plugged into the buckling holes.

According to an embodiment of the present disclosure, an outer wall of the power-connecting component is provided with an accommodating groove accommodating a sealing ring, and the sealing ring elastically abuts against the inner wall of the inner housing.

According to an embodiment of the present disclosure, an end of the power-connecting component is provided with a protruding limit member, and when the first snapping portions are plugged into the buckling grooves, the limit member is capable of abutting against a radial side wall of the battery compartment to achieve installation limitation.

According to an embodiment of the present disclosure, the power-connecting component includes a plug-in section and a mating section, the plug-in section is embedded in the inner housing, and an outer wall of the mating section abuts against the inner wall of the narrowing section.

According to an embodiment of the present disclosure, an adapter set is provided between the motor and the battery compartment, the bottom of the motor has a protruding portion being plugged into the adapter set, and an end of the adapter set covering the protruding portion is plugged into the battery compartment.

According to an embodiment of the present disclosure, a sealing member is provided between the motor and the covering portion, and the sealing member covers an end of the motor.

Additional aspects and advantages of the present disclosure will be set forth in part in the description which follows, and in part will be obvious from the description, or may be learned by practice of the present disclosure.

### BRIEF DESCRIPTION OF DRAWINGS

The present disclosure will be further described below in conjunction with the accompanying drawings and embodiments, where
FIG. 1 is a first cross-sectional view of a housing structure of an electric toothbrush in an embodiment of the present disclosure;
FIG. 2 is a second cross-sectional view of a housing structure of an electric toothbrush in an embodiment of the present disclosure;
FIG. 3 is a partial view of A in FIG. 2;
FIG. 4 is an exploded view of a power-connecting component and a battery compartment in an embodiment of the present disclosure; and
FIG. 5 is a partial view of B in FIG. 2.

### Reference numerals:

housing 100; brush head 101; narrowing section 102; motor 103; battery compartment 104; support frame 105; adapter set 106; protruding portion 107; power lever 108;
inner housing 110; buckling groove 111; baffle block 112; covering portion 113; sealing member 114; buckling hole 115;
power-connecting component 120; first snapping portion 121; accommodating groove 123; plug-in section 124; mating section 125; limit member 126; power-connecting terminal 127; second snapping portion 128.

### DETAILED DESCRIPTION

Embodiments of the present disclosure will be described in detail below, and examples of the embodiments are shown in the accompanying drawings, where throughout the same or similar reference numerals denote the same or similar elements or elements having the same or similar functions. The following embodiments described with reference to the accompanying drawings are exemplary and serve merely to explain the present disclosure, and should not be construed as limiting the present disclosure.

In the description of the present disclosure, it is to be understood that, referring to orientation description, the instructed orientation or positional relationships, for example, upper, lower, front, rear, left, right, etc., are based on the orientation or positional relationships shown in the accompanying drawings, merely for ease of description of the present disclosure and simplification for the description, rather than indicating or implying that the device or element referred to must have a specific orientation and be constructed and operated in a specific orientation. Therefore, the orientation description cannot be construed as limiting the present disclosure.

In the description of the present disclosure, "several" refers to "one or more", "a plurality of" refers to "two or more", "greater than, less than, over and the like" are understood not to include the end value, and "above, below, within and the like" are understood to include the end value. If described, "first" and "second" are merely for the purpose of distinguishing technical features, and not to be construed as indicating or implying relative importance or implicitly indicating the number of technical features indicated or implicitly indicating the precedence relationship of technical features indicated.

In the description of the present disclosure, unless explicitly defined otherwise, "providing", "installing", "connecting" and other words should be understood broadly, and a person skilled in the art can reasonably determine the specific meaning of the above words in the present disclosure combined with the specific content of the technical solution.

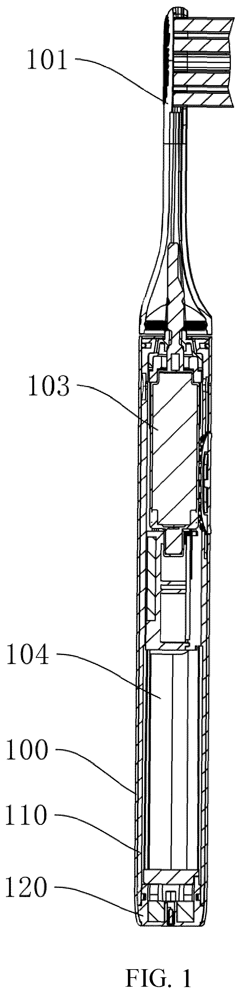

Referring to FIG. 1, according to an embodiment of the present disclosure, a housing structure of an electric toothbrush is applied to a handle body. An end of the handle body is provided with a brush head 101, and the handle body includes an outer housing 100 and an inner housing 110. The outer housing 100 has an inner cavity and is made of metal. The outer housing 100 can be made of stainless steel, aluminum alloy or magnesium alloy, etc. through integration, thus there are no gaps on the surface, and thereby optimizing the convenience of cleaning and avoiding plastics aging. An end of the outer housing 100 away from the brush head 101 is provided with a narrowing section having a gradually decreasing inner diameter. Optionally, inner and outer walls of the narrowing section are arc-shaped, which facilitates the integrated molding and beautiful appearance of the outer housing 100.

The inner housing 110 is nested within the outer housing 100 and is adhesively connected to an inner wall of the outer housing 100. Fixing the outer housing 100 and the inner housing 110 with an adhesive is helpful to simplify the connection structure, so as to improve the utilization of internal space. Moreover, electrical toothbrushes tend to be maintenance-free, and the use of adhesive connection can increase structural strength. Optionally, the inner housing 110 preferably uses a fully biodegradable polylactic acid (PLA) material. Polylactic acid has good biocompatibility and biodegradability, can be completely decomposed into water and carbon dioxide under specific conditions, and thus is environmentally friendly. At the same time, the brush head 101 can also be made of degradable environmentally friendly materials such as plant fiber to reduce environmental pollution. A power-connecting component 120 is inserted into the end of the inner housing 110. It can be understood that the power-connecting component 120 is used to implement charging. The power-connecting component 120 includes the use of contact or wireless induction to achieve charging. In the embodiments of the present disclosure, the power-connecting component 120 adopts a contact charging method and has a power-connecting terminal 127 for connecting to a charging stand, and the power-connecting terminal 127 has an end surface exposed at an end of the power-connecting component 120. The power-connecting component 120 is connected to an inner wall of the inner housing 110 in a buckled manner. The power-connecting component 120 is located in the narrowing section, and a radial outer wall of the power-connecting component 120 abuts against an inner wall of the narrowing section, which is helpful to prevent the inner housing 110 and the power-connecting component 120 at its end from loosening and falling out of the narrowing section, thereby avoiding waterproof failure caused by loosening, and improving the sealing performance, and further improving aesthetics by reducing gaps in the handle body.

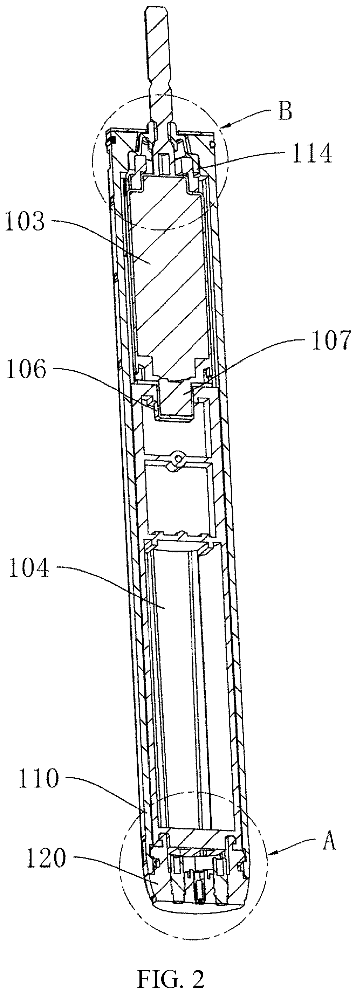

Specifically, referring to FIG. 2, a motor 103 and a battery compartment 104 provided within the inner housing 110are stacked in the axial direction of the inner housing 110. Optionally, an adapter sleeve 106 is provided between the motor and the battery compartment 104. The bottom of the motor 103 has a protruding portion 107 being plugged into the adapter set 106. One end of the adapter set 106 covering the protruding portion 107 is plugged into the battery compartment 104 to realize the plug-in positioning of the motor 103 and the battery compartment 104. It can be understood that the adapter set 106 can be made of flexible plastic or silicone and other flexible materials, so that an interference fit can be achieved between the adapter set 106 and the motor 103 and between the adapter set 106 and the battery compartment 104, thereby improving connection stability. Optionally, the end of the inner housing 110 away from the narrowing section is provided with a covering portion 113. The covering portion 113 has a through hole with an inner diameter less than that of the cavity of the inner housing 110. The motor 103 is provided with a power lever 108 that passes through the through hole. The power lever 108 is used to transmit vibration to the brush head 101. The end of the motor 103 abuts against the inner wall of the covering portion 113. It can be understood that during installation, the motor 103 and the battery compartment 104 are inserted from the end of the inner housing 110 that is provided with the power-connecting component 120, and abut against the covering portion 113 to achieve installation limitation.

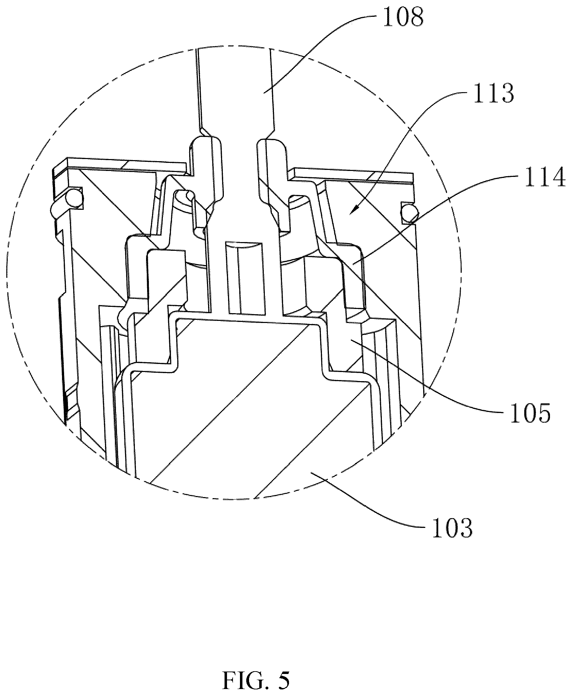

Referring to FIG. 5, a sealing member 114 is provided between the motor 103 and the covering portion 113, and the sealing member 114 covers the end of the motor 103. Further, the motor 103 is provided with a support frame 105. An end of the support frame 105 is inserted into the sealing member 114. The sealing member 114 and the support frame 105 as well as the covering portion 113 and the sealing member 114 are both in interference fit to achieve the sealing of the covering portion 113 and optimize the installation stability of the motor 103. Optionally, the sealing member 114 can be made of flexible materials such as silicone and fluor rubber, and the support frame 105 can be made of a material having a higher hardness than that of the sealing member 114, and preferably a PLA degradable environmentally friendly material that can be recycled and degraded to improve environmental protection.

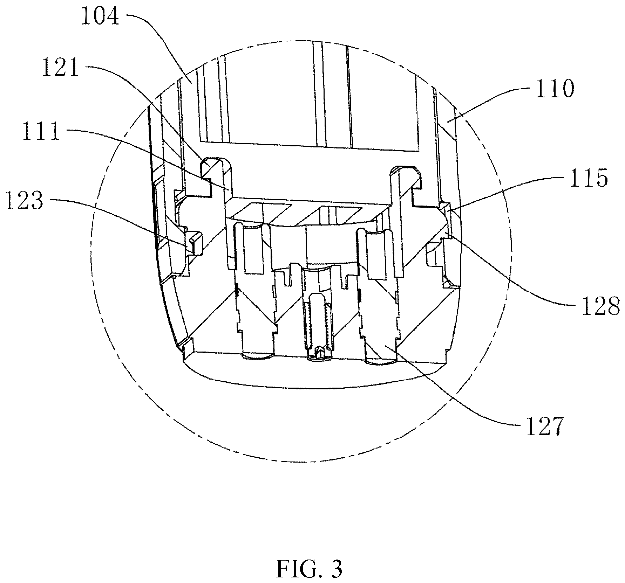

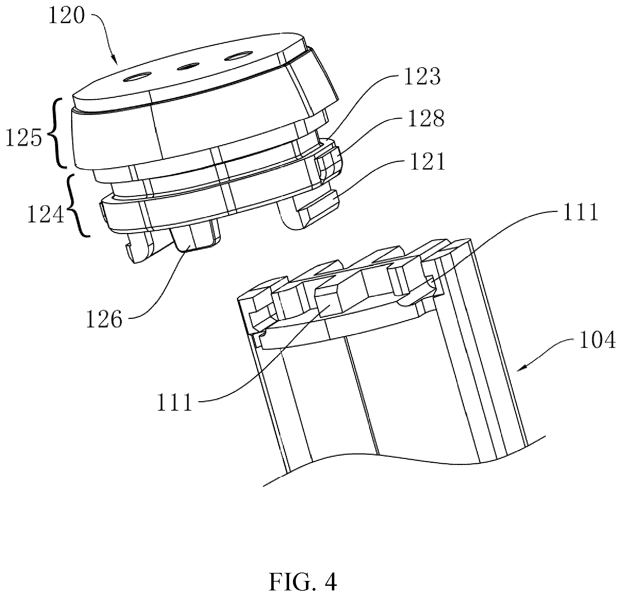

Referring to FIGs. 3 and 4, an end of the battery compartment 104 is provided with buckling grooves 111 running through both sides of the battery compartment 104 in a radial direction, and the power-connecting component 120 is buckled in the buckling grooves 111. Optionally, at least two buckling grooves 111 are provided to facilitate stable connection. At the same time, first snapping portions 121 are provided at both radial ends of the power-connecting component 120, and the first snapping portions 121 are plugged into the buckling grooves 111 to achieve installation connection. The first snapping portions 121 extend and protrude in the axial direction of the power-connecting component 120. The first snapping portions 121 have a hook-shaped cross-section to prevent it from falling out of the battery compartment 104. Further, the end of the power-connecting component 120 is provided with a protruding limit member 126. When the first snapping portions 121 are plugged into the buckling grooves 111, the limit member 126 is capable of abutting against a radial side wall of the battery compartment 104 to achieve installation limitation, so as to ensure that the outer wall surface of the power-connecting component 120 is aligned with the outer wall of the inner housing 110 during installation, thereby improving the smoothness and connection stability of installation in the outer housing 100. Optionally, the power-connecting component 120 includes a plug-in section 124 and a mating section 125. The plug-in section 124 is embedded in the inner housing 110, and an outer wall of the mating section 125 abuts against the inner wall of the narrowing section. Optionally, the outer wall of the mating section 125 and the inner wall of the narrowing section have similar shaped arc surfaces, which is conducive to stable pressure contact between the two.

Optionally, protruding second snapping portions 128 are provided on the radial outer side of the power-connecting component 120, and buckling holes 115 are provided in the inner wall of the inner housing 110, where the second snapping portions 128 is capable of being plugged into the buckling holes 115, and the buckling holes 115 are recessed in the inner wall of the inner housing 110. Optionally, at least two second snapping portions 128 are provided to ensure stable connection. Optionally, rounded corners are provided on the ends of the second snapping portions 128 close to the battery compartment 104 to reduce resistance when the power-connecting component 120 is plugged into the inner housing 110 and improve the convenience of installation. In conjunction with the aforementioned arrangement structure of the motor 103 and the battery compartment 104, it can be understood that after the motor 103, the battery compartment 104 and the power-connecting component 120 are fixedly connected in sequence, the end of the inner housing 110 away from the covering portion 113 is inserted and installed, and the second snapping portions and the buckling holes 115 are connected in a snapped manner to make the end of the motor 103 abut against the sealing member 114, thereby realizing the integrated installation of the motor 103, the battery compartment 104 and the power-connecting component 120 in the inner housing 110. Further, the outer housing 100 is sleeved from the end of the inner housing 110 where the power-connecting component 120 is provided, and during sleeved installation, an adhesive is injected into the gap between the outer housing 100 and the inner housing 110 to realize fixed connection and sealing between the inner housing 110 and the outer housing 100. Further, an outer wall of the power-connecting component 120 is provided with an accommodating groove 123 accommodating a sealing ring, and the sealing ring elastically abuts against the inner wall of the inner housing 110. Specifically, the accommodating groove 123 is annularly provided in the plug-in section 124 to achieve radial sealing between the power-connecting component 120 and the inner housing 110.

The embodiments of the present disclosure have been described in detail above with reference to the accompanying drawings. However, the present disclosure is not limited to the above embodiments. Within the scope of knowledge possessed by those of ordinary skill in the art, various changes can be made without departing from the purpose of the present disclosure.

## Claims

1. A housing structure of an electric toothbrush, the housing structure being applied to a handle body, and an end of the handle body being provided with a brush head (101), wherein the housing structure comprises:
an outer housing (100) having an inner cavity, the outer housing (100) being made of metal, wherein an end of the outer housing (100) away from the brush head (101) is provided with a narrowing section (102) having a gradually decreasing inner diameter; and
an inner housing (110) nested within the outer housing (100) and adhesively connected to an inner wall of the outer housing (100), wherein an end of the inner housing (110) is provided with a power-connecting component (120), the power-connecting component (120) is connected to an inner wall of the inner housing (110) in a buckled manner, the power-connecting component (120) is located in the narrowing section (102), and a radial outer wall of the power-connecting component (120) abuts against an inner wall of the narrowing section (102).

2. The housing structure of an electric toothbrush according to claim 1, wherein a motor (103) and a battery compartment (104) are provided in the inner housing (110), and an end of the inner housing (110) away from the narrowing section (102) is provided with a covering portion (113), and an end of the motor (103) abuts against an inner wall of the covering portion (113).

3. The housing structure of an electric toothbrush according to claim 2, wherein an end of the battery compartment (104) is provided with buckling grooves (111) running through both sides of the battery compartment (104) in a radial direction, and the power-connecting component (120) is buckled in the buckling grooves (111).

4. The housing structure of an electric toothbrush according to claim 3, wherein first snapping portions (121) are provided at both radial ends of the power-connecting component (120), and the first snapping portions (121) are plugged into the buckling grooves (111) to achieve installation connection.

5. The housing structure of an electric toothbrush according to claim 1, wherein protruding second snapping portions (128) are provided on the radial outer side of the power-connecting component (120), and the inner wall of the inner housing (110) is provided with buckling holes (115), and wherein the second snapping portions (128) is capable of being plugged into the buckling holes (115).

6. The housing structure of an electric toothbrush according to claim 1, wherein an outer wall of the power-connecting component (120) is provided with an accommodating groove (123) accommodating a sealing ring, and the sealing ring elastically abuts against the inner wall of the inner housing (110).

7. The housing structure of an electric toothbrush according to claim 4, wherein an end of the power-connecting component (120) is provided with a protruding limit member (126), and when the first snapping portions (121) are plugged into the buckling grooves (111), the limit member (126) is capable of abutting against a radial side wall of the battery compartment (104) to achieve installation limitation.

8. The housing structure of an electric toothbrush according to claim 1, wherein the power-connecting component (120) comprises a plug-in section (124) and a mating section (125), the plug-in section (124) is embedded in the inner housing (110), and an outer wall of the mating section (125) abuts against the inner wall of the narrowing section.

9. The housing structure of an electric toothbrush according to claim 2, wherein an adapter set (106) is provided between the motor (103) and the battery compartment (104), the bottom of the motor (103) has a protruding portion (107) being plugged into the adapter set (106), and an end of the adapter set (106) covering the protruding portion (107) is plugged into the battery compartment (104).

10. The housing structure of an electric toothbrush according to claim 2, wherein a sealing member (114) is provided between the motor (103) and the covering portion (113), and the sealing member (114) covers an end of the motor (103).

## Patentansprüche

1. Eine Gehäusestruktur einer elektrischen Zahnbürste, wobei die Gehäusestruktur an einem Griffkörper angewendet wird, und ein Ende des Griffkörpers mit einem Bürstenkopf (101) versehen ist, wobei die Gehäusestruktur aufweist:
ein Außengehäuse (100), welches einen Innenhohlraum aufweist, wobei das Außengehäuse (100) aus Metall hergestellt ist, wobei ein Ende des Außengehäuse (100) entfernt vom Bürstenkopf (101) mit einem Verengungsabschnitt (102) versehen ist, welcher einen allmählich abnehmenden Innendurchmesser aufweist; und
ein Innengehäuse (110), welches innerhalb des Außengehäuses (100) verschachtelt ist und klebend mit einer Innenwand des Außengehäuses (100) verbunden ist, wobei ein Ende des Innengehäuses (110) mit einem Stromanschlussbauteil (120) versehen ist, das Stromanschlussbauteil (120) in einer eingerasteten Weise mit einer Innenwand des Innengehäuses (110) verbunden ist, das Stromanschlussbauteil (120) im Verengungsabschnitt (102) angeordnet ist, und eine radiale Außenwand des Stromanschlussbauteils (120) gegen eine Innenwand des Verengungsabschnitts (102) stößt.

2. Die Gehäusestruktur einer elektrischen Zahnbürste nach Anspruch 1, wobei ein Motor (103) und ein Batteriefach (104) im Innengehäuse (110) vorgesehen sind, und ein Ende des Innengehäuses (110) entfernt vom Verengungsabschnitt (102) mit einem Abdeckabschnitt (113) versehen ist, und ein Ende des Motors (103) gegen eine Innenwand des Abdeckabschnitts (113) anliegt.

3. Die Gehäusestruktur einer elektrischen Zahnbürste nach Anspruch 2, wobei ein Ende des Batteriefachs (104) mit Einrastkerben (111) versehen ist, die durch beide Seiten des Batteriefachs (104) in einer radialen Richtung verlaufen, und das Stromanschlussbauteil (120) in die Einrastkerben (111) eingerastet ist.

4. Die Gehäusestruktur einer elektrischen Zahnbürste nach Anspruch 3, wobei erste Einrastabschnitte (121) an beiden radialen Enden des Stromanschlussbauteils (120) vorgesehen sind, und die ersten Einrastabschnitte (121) in die Einrastkerben (111) gesteckt sind, um die Montageverbindung zu erreichen.

5. Die Gehäusestruktur einer elektrischen Zahnbürste nach Anspruch 1, wobei vorspringende zweite Einrastabschnitte (128) an der radialen Außenseite des Stromanschlussbauteils (120) vorgesehen sind, und die Innenwand des Innengehäuses (110) mit Einrastlöchern (115) versehen ist, und wobei die zweiten Einrastabschnitte (128) fähig sind, in die Einrastlöcher (115) gesteckt zu werden.

6. Die Gehäusestruktur einer elektrischen Zahnbürste nach Anspruch 1, wobei eine Außenwand des Stromanschlussbauteils (120) mit einer Aufnahmenut (123) versehen ist, die einen Dichtring aufnimmt, und der Dichtring elastisch gegen die Innenwand des Innengehäuses (110) abstützt.

7. Die Gehäusestruktur einer elektrischen Zahnbürste nach Anspruch 4, wobei ein Ende des Stromanschlussbauteils (120) mit einem vorstehenden Begrenzungselement (126) versehen ist, und wenn die ersten Einrastabschnitte (121) in die Einrastkerben (111) gesteckt sind, das Begrenzungselement (126) fähig ist, gegen eine radialseitige Wand des Batteriefachs (104) anzuschlagen, um Installationsbegrenzung zu erreichen.

8. Die Gehäusestruktur einer elektrischen Zahnbürste nach Anspruch 1, wobei das Stromanschlussbauteil (120) einen Steckabschnitt (124) und einen Gegenstückabschnitt (125) aufweist, der Steckabschnitt (124) in dem Innengehäuse (110) eingebettet ist, und eine Außenwand des Gegenstückabschnitts (125) gegen die Innenwand des Verengungsabschnitts stößt.

9. Die Gehäusestruktur einer elektrischen Zahnbürste nach Anspruch 2, wobei ein Adaptersatz (106) zwischen dem Motor (103) und dem Batteriefach (104) vorgesehen ist, die Unterseite des Motors (103) einen vorspringenden Teil (107) aufweist, der in den Adaptersatz (106) gesteckt ist, und ein Ende des Adaptersatzes (106), welches den vorspringenden Teil (107) abdeckt, in das Batteriefach (104) gesteckt ist.

10. Die Gehäusestruktur einer elektrischen Zahnbürste nach Anspruch 2, wobei ein Dichtelement (114) zwischen dem Motor (103) und dem Abdeckabschnitt (113) vorgesehen ist, und das Dichtelement (114) ein Ende des Motors (103) abdeckt.

## Revendications

1. Une structure de boîtier d'une brosse à dents électrique, la structure de boîtier étant appliquée à un corps de manche, et une extrémité du corps de manche étant munie d'une tête de brosse (101), dans laquelle la structure de boîtier comprend :
un boîtier externe (100) ayant une cavité interne, le boîtier externe (100) étant fait de métal, dans lequel une extrémité du boîtier externe (100) éloignée de la tête de brosse (101) est munie d'une section de rétrécissement (102) ayant un diamètre intérieur diminuant progressivement ; et
un boîtier interne (110) imbriqué à l'intérieur du boîtier externe (100) et connecté adhésive-ment à une paroi interne du boîtier externe (100), dans lequel une extrémité du boîtier interne (110) est munie d'un composant de connexion d'alimentation (120), le composant de connexion d'alimentation (120) est connecté à une paroi interne du boîtier interne (110) de manière encliquetée, le composant de connexion d'alimentation (120) est situé dans la section de rétrécissement (102), et une paroi externe radiale du composant de connexion d'alimentation (120) appuie contre une paroi interne de la section de rétrécissement (102).

2. La structure de boîtier d'une brosse à dents électrique selon la revendication 1, dans laquelle un moteur (103) et un compartiment à batterie (104) sont prévus dans le boîtier interne (110), et une extrémité du boîtier interne (110) éloignée de la section de rétrécissement (102) est munie d'une portion de recouvrement (113), et une extrémité du moteur (103) bute contre une paroi interne de la portion de recouvrement (113).

3. La structure de boîtier d'une brosse à dents électrique selon la revendication 2, dans laquelle une extrémité du compartiment à batterie (104) est munie de rainures d'encliquetage (111) s'étendant à travers les deux côtés du compartiment à batterie (104) dans une direction radiale, et le composant de connexion d'alimentation (120) est enclenché dans les rainures d'encliquetage (111).

4. La structure de boîtier d'une brosse à dents électrique selon la revendication 3, dans laquelle des premières parties d'enclenchement (121) sont prévues aux deux extrémités radiales du composant de connexion d'alimentation (120), et les premières parties d'enclenchement (121) sont insérées dans les rainures d'encliquetage (111) pour réaliser la connexion de montage.

5. La structure de boîtier d'une brosse à dents électrique selon la revendication 1, dans laquelle des deuxièmes parties d'enclenchement (128) saillantes sont prévues sur le côté externe radial du composant de connexion d'alimentation (120), et la paroi interne du boîtier interne (110) est munie de trous de clipsage (115), et dans laquelle les deuxièmes parties d'enclenchement (128) sont capables d'être insérées dans les trous de clipsage (115).

6. La structure de boîtier d'une brosse à dents électrique selon la revendication 1, dans laquelle une paroi externe du composant de connexion d'alimentation (120) est munie d'une rainure de logement (123) logeant un joint d'étanchéité, et le joint d'étanchéité bute élastiquement contre la paroi interne du boîtier interne (110).

7. La structure de boîtier d'une brosse à dents électrique selon la revendication 4, dans laquelle une extrémité du composant de connexion d'alimentation (120) est munie d'un élément de limitation saillant (126), et lorsque les premières parties d'enclenchement (121) sont insérées dans les rainures d'encliquetage (111), l'élément de limitation (126) est capable de buter contre une paroi latérale radiale du compartiment à batterie (104) pour réaliser une limitation d'installation.

8. La structure de boîtier d'une brosse à dents électrique selon la revendication 1, dans laquelle le composant de connexion d'alimentation (120) comprend une section d'insertion (124) et une section d'accouplement (125), la section d'insertion (124) est encastrée dans le boîtier interne (110), et une paroi externe de la section d'accouplement (125) appuie contre la paroi interne de la section de rétrécissement.

9. La structure de boîtier d'une brosse à dents électrique selon la revendication 2, dans laquelle un ensemble adaptateur (106) est prévu entre le moteur (103) et le compartiment à batterie (104), le bas du moteur (103) a une portion saillante (107) étant insérée dans l'ensemble adaptateur (106), et une extrémité de l'ensemble adaptateur (106) recouvrant la portion saillante (107) est insérée dans le compartiment à batterie (104).

10. La structure de boîtier d'une brosse à dents électrique selon la revendication 2, dans laquelle un élément d'étanchéité (114) est prévu entre le moteur (103) et la portion de recouvrement (113), et l'élément d'étanchéité (114) couvre une extrémité du moteur (103).
